# EUROPEAN PATENT APPLICATION

(11) **EP 4 794 333 A1**
(43) Date of publication of application: **19.08.2026**
(21) Application number: 24926263.5
(22) Date of filing: 08.08.2024
(51) Int. Cl.: H04N 19/186, H04N 9/64, H04N 19/146

(54) **METHOD AND APPARATUS FOR LOW-POWER-CONSUMPTION AND SIMPLIFIED TRANSMISSION OF DISPLAY DATA, MEDIUM, PROGRAM PRODUCT, AND TERMINAL**

(71) Applicant: VeriSilicon Microelectronics (Shanghai) Co., Ltd., Shanghai 201203 (CN)
(72) Inventor: WANG, Zhiwei, Shanghai 201203 (CN); MU, Xiang, Shanghai 201203 (CN); ZHU, Chunguang, Shanghai 201203 (CN)
(74) Representative: Canzler & Bergmeier Patentanwälte Partnerschaft mbB
(86) International application number: PCT/CN2024/110696
(87) International publication number: WO 2026/031066

(57) **Abstract**

A method and a device for transmitting display data in a low-power and simplified manner, a medium, a program product, and a terminal are provided. By acquiring the to-be-transmitted image data, extracting one or more types of the channel image information from the to-be-transmitted image data based on the display mode of the receiving device to obtain the extracted channel image information, and arranging the extracted channel image information in the order of extraction to generate the to-be-transmitted queue, and packaging the to-be-transmitted queue in a preset manner to form the data packet and transmitting the data packet, the extraction of the channel image information is now more flexible, allowing users to choose and extract information from single or multiple channels based on their needs. The arranging of the extracted channel image information in the order of extraction effectively improves transmission efficiency, and the packaging of the to-be-transmitted queue in the preset manner ensures data integrity and accuracy. By utilizing the existing **MIPI** interface and protocol, the method of the present disclosure employs selective data extraction and low bandwidth during front-end encoding, transmission, and back-end decoding processes, which achieves efficient, low-power image data transmission, meeting the needs of wearable devices such as AR/VR glasses and headsets.

## Description

### FIELD OF THE INVENTION

The present disclosure relates to the field of image data transmission, and in particular, to a method and a device for transmitting display data in a low-power and simplified manner, a medium, a program product, and a terminal.

### BACKGROUND OF THE INVENTION

Low-power devices like augmented reality (AR) devices and virtual reality (VR) glasses are getting increasingly popular, but the size of their receiving devices is constrained, and manufacturing limitations prevent high-resolution displays. For example, if a red-green-blue (RGB) three-channel receiving device is implemented by three single-channel devices, each of these devices will discard data for the other two components, resulting in the transmission and decoding of invalid data and unnecessary power consumption.

Specifically, AR devices using Micro LED display technology typically use pixels that include red (R), green (G), and blue (B), each represented by an 8-bit packet format. Thus, if the host sends single-color video data or if the receiving device only supports single-channel data, the host must still packetize the data using a 24-bit encoding method. This leads to 16 bits of data being invalid due to a mismatch with the display format of the receiving device. The receiving device receives all bits of data for each pixel, including the invalid data, and discards the invalid portion, which not only wastes transmission bandwidth but also increases power consumption.

### SUMMARY OF THE INVENTION

In view of the above-mentioned shortcomings, the present disclosure provides a method and a device for transmitting display data in a low-power and simplified manner, a medium, a program product, and a terminal, which address the issue where, if the receiving device requires fewer image channels than the transmitting device provides, some channel data must be discarded, thereby avoiding increased transmission and decoding of invalid data, as well as unnecessary energy consumption.

A first embodiment of the present disclosure provides a method for transmitting display data in a low-power and simplified manner, comprising: acquiring to-be-transmitted image data, extracting one or more types of channel image information from the to-be-transmitted image data based on a display mode of a receiving device to obtain extracted channel image information, and arranging the extracted channel image information in the order of extraction to generate a to-be-transmitted queue, and packaging the to-be-transmitted queue in a preset manner to form a data packet and transmitting the data packet.

In some examples of the present disclosure, when extracting one type of channel image information from the to-be-transmitted image data, arranging the extracted channel image information in the order of extraction to generate the to-be-transmitted queue comprises: correspondingly extracting pixel data matching the display mode of the receiving device from a multi-channel image of the to-be-transmitted image data; rearranging every N pieces of pixel data as a group based on an original pixel size in the to-be-transmitted image data to generate pixel blocks; and arranging the pixel blocks sequentially to generate the to-be-transmitted queue.

In some examples of the present disclosure, packaging the to-be-transmitted queue in the preset manner comprises: packaging the to-be-transmitted queue in an uncompressed manner.

In some examples of the present disclosure, packaging the to-be-transmitted queue in the uncompressed manner comprises: packaging the to-be-transmitted queue, a data packet header (or, packet header), and a data packet footer (or, packet footer) in the uncompressed manner to generate the data packet.

In some examples of the present disclosure, the data packet header comprises a virtual channel number, and when the virtual channel number is determined to be three, the channel image information extracted from the to-be-transmitted image data is identified as single-channel image information.

In some examples of the present disclosure, packaging the to-be-transmitted queue in the uncompressed manner comprises: packaging an identification data structure and the to-be-transmitted queue in the uncompressed manner, where the identification data structure comprises a first byte and a second byte.

In some examples of the present disclosure, two low bits in the first byte are configured to represent a color channel for extraction, and the second byte comprises a CRC value of the first byte.

In some examples of the present disclosure, after the to-be-transmitted queue is packaged in the preset manner and the data packet is transmitted, the receiving device receives the data packet and verifies the first byte and the second byte; if the first byte and the second byte pass verification, the data packet is parsed based on the color channel in the first byte, and if the first byte or the second byte fails verification, the data packet is parsed based on a standard protocol.

In some examples of the present disclosure, the data packet header comprises one or more of a data type, a virtual channel, a count of words, and an error correction code.

In some examples of the present disclosure, the data packet footer comprises a CRC algorithm, an MD5 algorithm, an SHA-1 algorithm, or an SHA-256 algorithm.

In some examples of the present disclosure, when extracting two or more types of channel image information from the to-be-transmitted image data, arranging the extracted channel image information in the order of extraction to generate the to-be-transmitted queue comprises: correspondingly extracting first pixel data and second pixel data matching the display mode of the receiving device from a multi-channel image of the to-be-transmitted image data; rearranging every N pieces of pixel data as a group based on an original pixel size in the to-be-transmitted image data to generate pixel blocks; and arranging the pixel blocks sequentially to generate the to-be-transmitted queue.

In some examples of the present disclosure, the generation of the to-be-transmitted queue further comprises: extracting features of all the first pixel data and the second pixel data, combining the first pixel data and the second pixel data based on similarity or difference of the features to generate a pixel block queue, and performing an optimization operation on the pixel block queue to generate the to-be-transmitted queue.

In some examples of the present disclosure, the optimization operation comprises one or more of color adjustment and shape correction.

In some examples of the present disclosure, attributes of the display mode of the receiving device comprise one or more of types of display channels of the receiving device, a count of the display channels of the receiving device, a resolution of the receiving device, a refresh rate of the receiving device, a color model of the receiving device, and a color space standard corresponding to the display channels of the receiving device.

In some examples of the present disclosure, a communication protocol standard for transmitting the data packets comprises one of an MIPI DSI standard, an LVDS standard, an EDP standard, and an HDMI standard; and/or the to-be-transmitted image data comprises RGB images.

In some examples of the present disclosure, when the MIPI DSI standard is adopted for transmitting the data packets, packaging the to-be-transmitted queue in the preset manner comprises: packaging the to-be-transmitted queue as a pixel stream in a 24-bit format using a long data packet.

A second embodiment of the present disclosure provides a device for transmitting display data in a low-power and simplified manner, comprising a data acquisition module, a channel extraction module, and a data packaging module. The data acquisition module acquires to-be-transmitted image data. The channel extraction module extracts one or more types of channel image information from the to-be-transmitted image data based on a display mode of a receiving device to obtain extracted channel image information, and arranges the extracted channel image information in the order of extraction to generate a to-be-transmitted queue. The data packaging module packages the to-be-transmitted queue in a preset manner to form a data packet and transmits the data packet.

A third embodiment of the present disclosure provides a non-transitory computer-readable storage medium storing a computer program. The computer program is executed by a processor to implement the method as described in the examples of the first embodiment of the present disclosure.

A fourth embodiment of the present disclosure provides a computer program product having computer program codes stored thereon. The computer program codes run on a computer to implement the method as described in the examples of the first embodiment of the present disclosure.

A fifth embodiment of the present disclosure provides an electronic terminal, comprising a memory, a processor, and a computer program stored on the memory. The computer program is executed by the processor to implement the method as described in the examples of the first embodiment of the present disclosure.

As described above, the method, the device, the medium, the program product, and the terminal of the present disclosure have following advantages: The extraction of the channel image information is now more flexible, allowing users to choose and extract information from single or multiple channels based on their needs. By optimizing the extraction order, the sequence and speed of data transmission are improved, thereby enhancing transmission efficiency. The preset data packaging method ensures the integrity and accuracy of data during transmission, increasing reliability. By utilizing the existing MIPI interface and protocol, the method of the present disclosure employs selective data extraction and low bandwidth during front-end encoding, transmission, and back-end decoding processes, which achieves efficient, low-power image data transmission, meeting the needs of wearable devices such as AR/VR glasses and headsets.

### BRIEF DESCRIPTION OF DRAWINGS

FIG. 1 is a flowchart of a method for transmitting display data in a low-power and simplified manner according to an embodiment of the present disclosure.
FIG. 2 is a schematic structural diagram of an RGB data packet for the method for transmitting the display data in a low-power and simplified manner according to an embodiment of the present disclosure.
FIG. 3 is a schematic diagram showing an extraction process of the method for transmitting the display data in a low-power and simplified manner according to an embodiment of the present disclosure.
FIG. 4 is a schematic diagram of a data packet, adopting an MIPI DSI standard, for the method for transmitting the display data in a low-power and simplified manner according to an embodiment of the present disclosure.
FIG. 5 is a schematic diagram of an identification data structure for the method for transmitting the display data in a low-power and simplified manner according to an embodiment of the present disclosure.
FIG. 6 is a waveform of data transmission using a method for the method for transmitting the display data in a low-power and simplified manner according to an embodiment of the present disclosure.
FIG. 7 is a waveform of data transmission using a method for transmitting display data in a low-power and simplified manner in the existing technology.
FIG. 8 is a schematic diagram of a device for transmitting the display data in the low-power and simplified manner according to an embodiment of the present disclosure.
FIG. 9 is a schematic diagram of a terminal for transmitting the display data in the low-power and simplified manner according to an embodiment of the present disclosure.

### DETAILED DESCRIPTION OF THE INVENTION

The embodiments of the present disclosure will be described below. Those skilled can easily understand other advantages and effects of the present disclosure according to contents disclosed by the specification. The present disclosure can also be implemented or applied through other different specific embodiments. Various details in this specification can also be modified or changed based on different viewpoints and disclosures without departing from the spirit of the present disclosure. It should be noted that the following embodiments and features of the following embodiments can be combined with each other if no conflict will result.

Before diving into the detailed description, terms and concepts involved in the embodiments of the present disclosure are explained as follows:
<1> Image Channel: An individual path where digital image data is separated by color type during transmission and processing. Common image channels comprise the R channel for red data, the G channel for green data, and the B channel for blue data.
<2> Mobile Industry Processor Interface Display Serial Interface (MIPI DSI) Protocol: A standard that defines the physical layer and data link layer for high-speed wired connections, used for transmitting pixel data, synchronization signals, and control information between components such as display controllers and displays in mobile devices.
<3> RGB Image: A format that decomposes and reconstructs digital images in a way that aligns with human vision, by separating the color components of each pixel into three primary color channels: the R channel for red, the G channel for green, and the B channel for blue.
<4> Resolution: The number of the smallest pixel units that can be displayed on an image or display surface, typically expressed as the number of horizontal pixels multiplied by the number of vertical pixels. This value represents the level of detail an image or display can show.
<5> Refresh Rate: The number of times per second a receiving device can redraw the entire screen content, usually measured in Hertz (Hz). A higher refresh rate results in smoother and clearer motion images.
<6> Color Model: A mathematical representation that defines and describes colors, aiming to accurately represent any color in a digital environment. Common color models comprise RGB and CMYK. The RGB model mixes red (R), green (G), and blue (B) to generate other colors, while the CMYK model uses cyan (C), magenta (M), yellow (Y), and black (K).
<7> Color Space Standard: A set standard that defines a common coordinate system to locate and quantify colors, enabling standardized and consistent transmission and conversion of color information between different devices. It specifies details like the origin and reference for color positioning and anisotropic processing methods.

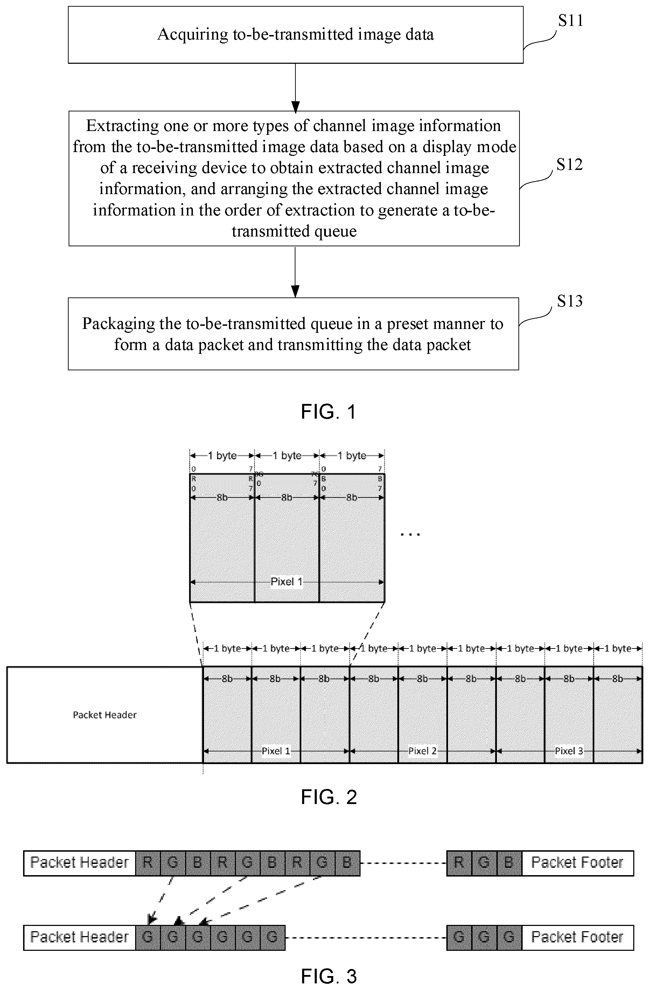

For ease of understanding, the embodiments of the present disclosure will be described in detail below in connection with FIG. 1. FIG. 1 is a flowchart of a method for transmitting display data in a low-power and simplified manner according to an embodiment of the present disclosure. The method of the present disclosure mainly comprises steps S11-S13.

Step S11 comprises acquiring to-be-transmitted image data.

In one embodiment of the present disclosure, the to-be-transmitted image data comprises RGB images. FIG. 2 is a schematic structural diagram of an RGB data packet (i.e., an RGB image) according to an embodiment of the present disclosure. The RGB data packet comprises a data packet header and a variable-sized payload. The payload contains multiple bytes, with each byte or every eight bits representing one pixel component in a pixel of image. Each pixel consists of three bytes, representing the red, green, and blue channels, respectively. Each image comprises several pixels; for example, only three pixels are shown in FIG. 2, with each pixel occupying three bytes, totaling nine bytes.

Step S12 comprises extracting one or more types of channel image information from the to-be-transmitted image data based on a display mode of a receiving device to obtain extracted channel image information, and arranging the extracted channel image information in the order of extraction to generate a to-be-transmitted queue.

Step S13 comprises packaging the to-be-transmitted queue in a preset manner to form a data packet and transmitting the data packet.

In one embodiment of the present disclosure, attributes of the display mode of the receiving device comprise one or more of: types of display channels of the receiving device, a count of the display channels of the receiving device, a resolution of the receiving device, a refresh rate of the receiving device, a color model of the receiving device, and a color space standard corresponding to the display channels of the receiving device.

The method of the present disclosure addresses the issue in existing technology where, if the receiving device requires fewer display channels than the multi-channel image it receives, some channel data must be discarded, which leads to increased transmission and decoding of invalid data, as well as unnecessary energy consumption. For different types of display channels, corresponding information is extracted based on the characteristics of each channel. For example, for RGB multi-channel, the channel image information for the red, green, and blue channels can be extracted. The extraction operation is based on the color performance characteristics of the receiving device to ensure that the extracted channel image information accurately represents the corresponding color space while avoiding the transmission of invalid data.

Exemplarily, in applications like AR/VR, when the receiving device can only use single-channel data for display, an appropriate color channel can be selected based on the actual situation. If the transmission bandwidth is limited and it is necessary to minimize the amount of transmitted data, a single-color channel, such as the green channel, can be selectively extracted. The green channel is chosen because it contains the most brightness information in an RGB image, which helps maintain the overall brightness and contrast of the image. Compared to the red and blue channels, the human visual perception is more sensitive to the green channel, making the green channel better at conveying the overall structure and details of the image. Therefore, when the transmission bandwidth is limited, transmitting only the green channel can minimize data transmission while maintaining image quality, reducing transmission load, and improving transmission efficiency.

In one embodiment of the present disclosure, when extracting one type of channel image information from the to-be-transmitted image data, arranging the extracted channel image information in the order of extraction to generate the to-be-transmitted queue comprises: correspondingly extracting pixel data matching the display mode of the receiving device from a multi-channel image of the to-be-transmitted image data; rearranging every N pieces of pixel data as a group based on an original pixel size in the to-be-transmitted image data to generate pixel blocks; and arranging the pixel blocks sequentially to generate the to-be-transmitted queue.

FIG. 3 is a schematic diagram of an extraction process when only one type of channel image information is extracted from the to-be-transmitted image data. The top part of the FIG. 3 shows the original data sequence, comprising a data packet header, a pixel data queue (R, G, B), and a data packet footer. The bottom part of the FIG. 3 shows the pixel data queue after extracting and reordering the green channels. When the receiving device gets this queue, it only needs to collect the required data. For example, if the receiving device only needs the green channel, the method of the present disclosure combines the pixel components of three pixels into one RGB pixel. The method of the present disclosure helps reduce data transmission volume, allowing the link to stay in low-power mode for longer.

In one embodiment of the present disclosure, when the receiving device needs to analyze and recognize skin color, it extracts the pixel components of the red and green channel from the multi-channel image to highlight their features. When extracting two or more types of channel image information from the to-be-transmitted image data, arranging the extracted channel image information in the order of extraction to generate the to-be-transmitted queue comprises: correspondingly extracting first pixel data and second pixel data matching the display mode of the receiving device from a multi-channel image of the to-be-transmitted image data; rearranging every N pieces of pixel data as a group based on an original pixel size in the to-be-transmitted image data to generate pixel blocks; and arranging the pixel blocks sequentially to generate the to-be-transmitted queue.

Further, the generation of the to-be-transmitted queue further comprises: extracting features of all the first pixel data and the second pixel data, combining the first pixel data and the second pixel data based on similarity or difference of the features to generate a pixel block queue, and performing an optimization operation on the pixel block queue to generate the to-be-transmitted queue.

In one embodiment of the present disclosure, the optimization operation comprises one or more of color adjustment and shape correction. The color adjustment modifies the hue, saturation, brightness, or color balance of the image by tweaking pixel component data, achieving a more desired or aesthetically pleasing visual effect. The shape correction improves the image's shape characteristics by adjusting pixel component data, such as smoothing edges, filling gaps, eliminating noise, and resizing.

It should be noted that the transmitted data is not compressed. Instead, front-end encoding filters out invalid channel components of the multi-channel image to save bandwidth. The method of the present disclosure maintains lossless transmission to fully preserve image quality, simplifies the decoding process, saves computing resources, and is suitable for real-time low-latency scenarios. This approach is particularly well-suited for single-channel low-power devices, which typically have limited computing power and are unsuitable for complex compression/decompression algorithms. Narrow bandwidth might negate the benefits of compression due to encoding/decoding overhead. In applications requiring high real-time performance, reliability, and image fidelity, and where single-channel device computing power is relatively weak, directly transmitting raw image data can significantly enhance image quality.

In one embodiment of the present disclosure, packaging the to-be-transmitted queue in the uncompressed manner comprises: packaging the to-be-transmitted queue, the data packet header, and the data packet footer in the uncompressed manner to generate the data packet. In one embodiment of the present disclosure, the data packet header comprises a virtual channel number, and when the virtual channel number is determined to be three, the channel image information extracted from the to-be-transmitted image data is identified as single-channel image information.

In one embodiment of the present disclosure, the MIPI DSI protocol is used for transmitting image data. The MIPI DSI protocol connects application processors and display receivers in mobile devices, transmitting display timing and image information by data packets. This protocol comprises a high-speed mode for data transmission and a low-power low-speed mode for saving energy. The MIPI DSI protocol supports four video or image transmission methods (i.e., packet formats). First, Packed Pixel Stream, 16-bit Format (data type 001110): Efficient image transmission in a 16-bit packed pixel stream format, suitable for applications requiring high memory bandwidth. Second, Packed Pixel Stream, 18-bit (or, 18b) Format (data type 011110): Packs consecutive pixel component data into long packets in 18-bit format, ideal for scenarios requiring high image quality. Third, Pixel Stream, 18-bit Three-Byte Formation (data type 10): Organizes data into three bytes, making processing more intuitive and suitable for clear transmission. Fourth, Packed Pixel Stream, 24-bit Format (data type 111110): Each pixel is represented by 24-bit data, ideal for high-end displays or video playback. AR devices commonly use Micro LED-based display technology and adopt the fourth packet format (Packed Pixel Stream, 24-bit Format). In this format, each pixel comprises three colors: red (R), green (G), and blue (B), with each color component represented by 8 bits. When the host sends single-color video data or the receiving device only supports single-channel data, the host still needs to packetize the data using a 24-bit encoding method, which renders the remaining 16 bits of data invalid. The receiving device will receive and discard the invalid data, wasting transmission bandwidth and increasing power consumption.

Additionally, in the MIPI DSI protocol, data transmission uses the Packed Pixel Stream, 24-bit Format, Long Packet. In this format, the virtual channel field in the metadata indicates the type of data transmission. When the virtual channel number is set to three, it signifies the transmission of monochrome image data and its corresponding data transmission format. the receiving device needs to parse the received data packet header, extract the virtual channel number, and check if the virtual channel number is 3. If so, the current transmission is identified as monochrome image data. Based on the format of the monochrome image data, the corresponding algorithm is applied to convert or decode the data. The processed monochrome image data is then displayed or stored, ensuring the correct display of image information.

It is worth noting that the Packed Pixel Stream, 24-bit Format, Long Packet is designed for efficient image data transmission or storage, by packaging the to-be-transmitted queue as a pixel stream in a 24-bit format using a long data packet. This format uses 24 bits per pixel, and the data is organized into long packets to maximize data throughput.

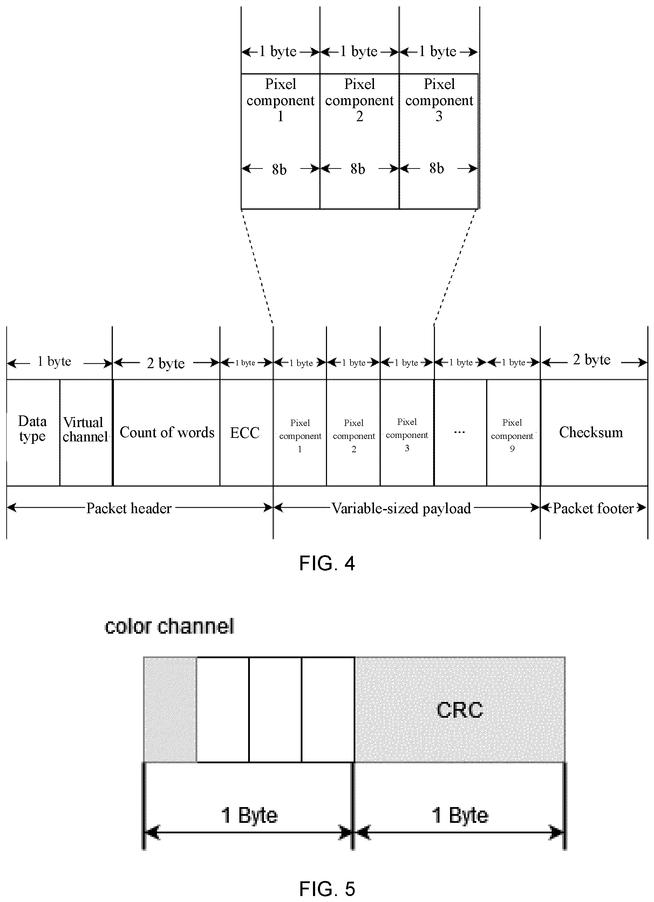

FIG. 4 is a schematic diagram of a data packet using the Packed Pixel Stream, 24-bit Format, Long Packet, Data Type = 11 1110 (3Eh) MIPI packet format. By reusing this packet format, the 24-bit data of each pixel is used to transmit three adjacent pixel components of 8-bit red, green, or blue (R, G, or B) data. When the image contains only green, the data bits are reduced to one-third of the standard MIPI transmission, significantly improving transmission efficiency.

As shown in FIG. 4, the data packet comprises a header (i.e., data packet header), a variable-sized payload, and a footer (i.e., data packet footer). In one embodiment of the present disclosure, the header comprises one or more of a data type, a virtual channel, a count of words, and an error correction code (ECC), to identify the packet's basic attributes and ensure data integrity. The payload comprises single-channel pixel data. Here, the data of the first nine pixels is packed together, with single-channel color information (R, G, or B) for each pixel, stored in 8-bit format. The specific size and dimensions are variable and can be determined based on the number of the transmitted pixels. The footer contains a checksum and other necessary end information to verify data integrity and correctness. Checksum algorithms used in the footer may comprise Cyclic Redundancy Check (CRC), MD5, SHA-1, or SHA-256.

In one embodiment of the present disclosure, the footer comprises specific markers or correction codes to detect if the transmitted data packet has been modified or corrupted. The transmitting device adds start and end markers and calculates the checksum or correction code before and after transmitting the data. Upon receiving the data packet, the receiving device checks the markers, recalculates the checksum, and compares it with the original correction code. If the recalculated checksum matches the original correction code, the data packet is verified; if not, the receiving device requests the transmitting device to resend the data packet, which ensures data reliability and promptly identifies any data corruption or tampering.

In one embodiment of the present disclosure, packaging the to-be-transmitted queue in the uncompressed manner comprises: packaging an identification data structure and the to-be-transmitted queue in the uncompressed manner, where the identification data structure comprises a first byte and a second byte. Two low bits in the first byte are configured to represent a color channel for extraction, and the second byte comprises a CRC value of the first byte.

In one embodiment of the present disclosure, a method of Magic Data is used to identify monochrome images and their data transmission format packets. For the identification data structure, the first byte is defined as Magic Data, which not only identifies the data type but also contains important information about the color channel. Two low bits of Magic Data indicate the type of color channel, for example, 0b00 represents red (R), 0b01 represents green (G), and 0b10 represents blue (B). Additionally, the second byte stores the CRC value of the first byte. The CRC value ensures the data has not been tampered with or damaged during transmission, thus improving data reliability.

It is worth noting that Magic Data is a specialized identification method for data transmission, whose data typically contains specific flag bits and checksum mechanisms to indicate data types and ensure data integrity. Bits of certain bytes convey critical information such as color channels and data types, while the CRC value verifies data accuracy, enhancing transmission reliability.

FIG. 5 is a schematic diagram of the identification data structure that utilizes Magic Data. The leftmost box represents the color channel, which is one byte wide. The two low bits of the first byte indicate the type of color channel (not shown). The right large box represents the CRC value used to verify the first byte on the receiving device. It is important to note that although the color channel in FIG. 5 is the green channel, this serves only as an explanatory embodiment and not as a limitation. The identification data structure can also be applied to various channels, such as the red channel (R) and blue channel (B).

After the data transmission is complete, the receiving device first parses the first byte and the second byte, to confirm whether the format of the first byte is as expected. The receiving device verifies whether the two low bits of the first byte contain the data format for indicating the type of color channel, and verifies the CRC value of the second byte. If both the first byte and the second byte pass verification, the receiving device proceeds with the monochrome data parsing, and if the first byte or the second byte fails verification, the receiving device parses the data based on the standard MIPI DSI protocol. The identification method of Magic Data is not only simple and clear but also provides an efficient and reliable mechanism for handling monochrome image data, reducing errors and improving the effectiveness of data transmission.

In one embodiment of the present disclosure, the header further comprises control information for extracting the same type of channel, such as extraction type, packet type, transmitting address, receiving address, and data length, ensuring that network devices can correctly process and forward the packet. The footer further comprises verification information to ensure the packet has not been damaged during transmission and maintain integrity.

In one embodiment of the present disclosure, a communication protocol standard for transmitting the data packets comprises one of an MIPI DSI standard, an LVDS standard, an EDP standard, and an HDMI standard.

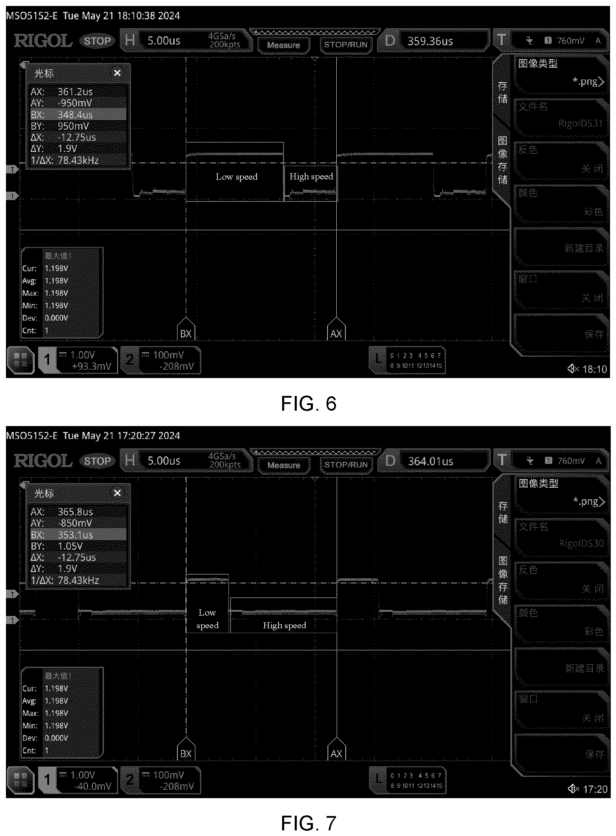

Referring to FIGs. 6 and 7, FIG. 7 is a waveform of image data transmission using a method in the existing technology. As seen in FIG. 7, the transmission link remains in a high-speed state for a long duration when transmitting all pixels, which can reduce transmission efficiency. To improve this, FIG. 6 shows a more efficient image data transmission using a method according to an embodiment of the present disclosure. When only the pixels needed by the backend are transmitted, as shown in FIG. 6, the duration of the high-speed state of the transmission link when transmitting a line of data is significantly shortened. By reducing unnecessary data transmission, the method of the present disclosure effectively improves transmission efficiency and saves transmission time and resources. The optimized transmission method can be widely applied in various scenarios, bringing higher efficiency and performance improvement for channel-separated, especially image data transmission of single-channel. "Channel-separated" refers to extracting single or multiple channels of image data from the original multi-channel data. The embodiments of the present disclosure make full use of the transmission link, providing a more efficient transmission method while ensuring data integrity, thus bringing innovation and breakthroughs in the field of image data transmission. This optimization not only enhances transmission efficiency but also helps reduce resource waste, providing users with a better transmission experience and service.

It should be noted that, in the present disclosure, the terms "exemplary" or "for example" indicate instances, illustrations, or explanations. Any embodiment or design described as "exemplary" or "for example" should not be seen as preferred or superior to other embodiments or designs. These terms are simply used to present related concepts.

In the present disclosure, "at least one" means one or more, and "multiple" means two or more. "And/or" describes relationships between related items, indicating three possible scenarios. For example, "A and/or B" can mean A alone, A and B together, or B alone, where A and B can be singular or plural. The character "/" generally signifies an "or" relationship between associated items. "The following at least one (item)" or similar phrases refer to any combination of these items, including any single item or combination of multiple items. For example, "at least one of a, b, and c" can mean a, b, c, a-b, a-c, b-c, or a-b-c, where a, b, and c can be singular or plural.

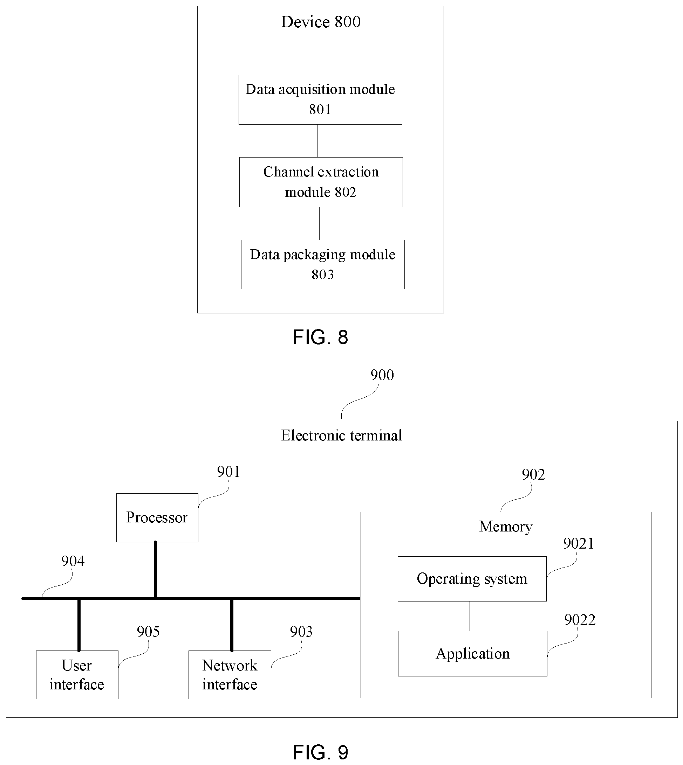

FIG. 8 is a block diagram of a device 800 for transmitting the display data in the low-power and simplified manner according to an embodiment of the present disclosure. As shown in FIG. 8, the device 800 comprises a data acquisition module 801, a channel extraction module 802, and a data packaging module 803.

The data acquisition module 801 acquires to-be-transmitted image data.

The channel extraction module 802 extracts one or more types of channel image information from the to-be-transmitted image data based on a display mode of a receiving device to obtain extracted channel image information, and arranges the extracted channel image information in the order of extraction to generate a to-be-transmitted queue.

The data packaging module 803 packages the to-be-transmitted queue in a preset manner to form a data packet and transmits the data packet.

It should be understood that the specific processes performed by each module have been detailed in the previous method embodiments and will not be repeated here for brevity.

Additionally, the division of modules in the present disclosure is illustrative and represents one logical division of functions. Different divisions could be used in actual implementation. Furthermore, the functional modules in each embodiment of the present disclosure can be integrated into a single processor, exist separately, or be integrated into one module from two or more modules. The integrated modules can be implemented in hardware or as software functional modules.

FIG. 9 is a block diagram of an electronic terminal 900 according to an embodiment of the present disclosure. As shown in FIG. 9, the electronic terminal 900 comprises at least one processor 901, a memory 902, and at least one network interface 903, and a user interface 905. Various components of the electronic terminal 900 are coupled together through a bus system 904. It should be understood that the bus system 904 is configured to implement connection and communication between these components. In addition to a data bus, the bus system 904 further comprises a power bus, a control bus, and a status signal bus. However, for clear description, various buses are marked as the bus system 904 in FIG. 9.

The user interface 905 may comprise a display, keyboard, mouse, trackball, stylus, buttons, touchpad, or touchscreen, among other input devices.

The memory 902 can be either volatile or non-volatile memory, or a combination of both. Non-volatile memory can comprise read-only memory (ROM), programmable read-only memory (PROM), used as external high-speed cache. Examples of RAM comprise static random-access memory (SRAM) and synchronous static random-access memory (SSRAM). The memory 902 of the present disclosure comprises, but is not limited to, these types and any other suitable memory types.

The memory 902 stores various types of data to support the operation of the electronic terminal 900. Examples comprise any executable programs such as an operating system 9021 and an application 9022. The operating system 9021 comprises various system programs like the framework layer, core libraries, and drivers to handle basic functions and hardware tasks. The application 9022 can comprise programs like media players and browsers for different services. The method of the present disclosure can be part of the application 9022.

The method of the present disclosure can run on or be executed by the processor 901. The processor 901 could be an integrated circuit chip with signal processing capabilities. In the implementation process, each operation of the above method may be completed by an integrated logic circuit of hardware in the processor 901 or an instruction in a form of software. The processor 901 can be a general-purpose processor, digital signal processor (DSP), or other programmable logic devices, discrete gates, transistor logic devices, or discrete hardware components. The processor 901 can implement or execute the methods, steps, and logic diagrams disclosed in the present disclosure. The general-purpose processor can be a microprocessor or any conventional processor. The steps of the method of the present disclosure can be executed directly by a hardware decoder processor, or by a combination of hardware and software modules. Software modules can reside in a storage medium, which is part of the memory. The processor reads the information from the memory and, together with its hardware, executes the steps of the described method.

In an exemplary embodiment, the electronic terminal 900 comprises one or more of application-specific integrated circuits (ASICs), DSPs, programmable logic devices (PLDs), and complex programmable logic devices (CPLDs), to perform the described method.

The present disclosure further provides a computer program product having computer program codes stored thereon. The computer program codes run on a computer to implement the method for transmitting the display data in a low-power and simplified manner as described in the previous method embodiments.

The present disclosure further provides a non-transitory computer-readable storage medium storing a computer program. The computer program is executed by a processor/computer to implement the method for transmitting the display data in a low-power and simplified manner as described in the previous method embodiments.

In the present disclosure, the terms "component," "module," "system," etc., refer to computer-related entities that can be hardware, firmware, software, a combination of these, or software in execution. For example, a component can be a process running on a processor, a processor itself, an object, an executable file, an executing thread, a program, or a computer. Both an application running on a computing device and the computing device itself can be considered components. One or more components can reside within a process or a thread of execution, and a component can be located on one computer or distributed across two or more computers. These components can execute from various computer-readable media that store different data structures. For instance, components can communicate via local and/or remote processes based on signals with one or more data packets (e.g., data from components interacting with a local system, distributed system, or another component over a network like the Internet).

Those skilled in the art will recognize that the various illustrative logical blocks and steps described in the embodiments can be implemented using electronic hardware, computer software, or a combination of both. Whether these functions are executed by hardware or software depends on the specific application and design constraints of the technical solution. Professional technicians can use different methods to implement the functions described for each specific situation, but such implementation should not be considered beyond the scope of the present disclosure.

For brevity, professionals in the field will recognize that the specific operational processes of the systems, devices, and units described can be referenced in the corresponding processes of the previous method embodiments.

In the several embodiments proposed in the present disclosure, the disclosed systems, devices, and methods can be implemented in other ways. For example, the embodiments of devices described above are only illustrative, and the division of units is only a logical functional division. In actual implementation, there may be other division methods, such as multiple units or components can be combined or integrated into another system, or some features can be ignored or not executed. Here, the coupling or direct coupling or communication connection between each other can be indirect coupling or communication connection through some interfaces, devices, or units, and can be electrical connection, mechanical connection, or other connections.

The units shown as separate components can be physically separated or not. The components shown as units can be physical modules or not. That is, they can be located in one place, or they can also be distributed to multiple network units. Some or all of the units can be selected as needed to achieve the purpose of the embodiment.

Additionally, in the present disclosure, each functional unit can be integrated into one processing module. Each functional unit can exist physically separately, or two or more units can be integrated into one unit.

In the present disclosure, the functions of each unit can be implemented entirely or partially through software, hardware, firmware, or any combination of these. When implemented via software, it can be realized entirely or partially as a computer program product. The computer program product comprises one or more computer instructions. When these instructions are loaded and executed on a computer, they generate all or part of the processes or functions described in the present disclosure. The computer could be a general-purpose computer, a specialized computer, a computer network, or other programmable devices. The computer instructions can be stored on a non-transitory computer-readable storage medium or transmitted from one medium to another, such as from a website, computer, server, or data center to another via wired (e.g., coaxial cable, optical fiber, digital subscriber line (DSL)) or wireless (e.g., infrared, wireless, microwave) means. The above storage medium can be any available medium that can be accessed by a computer, or a data storage device that integrates one or more available media, such as a server, a data center, etc. The available medium can be a magnetic medium (such as a floppy disk, a hard disk, or a magnetic tape), an optical medium (such as a digital video disc (DVD)), or a semiconductor medium (such as a solid-state disk (SSD)), etc.

The described functions may be stored in the computer readable storage medium if implemented as software functional units and sold or used as standalone products. It is understood that the technical solution of the present disclosure, or the part of the technical solution that improves upon the prior art, may be embodied in the form of a software product that is stored in a storage medium and comprises a number of instructions to cause a computer (which may be a personal computer, a server, or a network device, etc.) to perform all or some of the steps of a method described in various embodiments of the present disclosure. The foregoing storage medium comprises various medium that may store program codes, such as USB drives, portable hard drives, Read-Only Memories (ROMs), Random Access Memories (RAMs), magnetic disks, or optical disks.

The above embodiments are merely illustrative. Any changes or replacements that can be easily thought of by those skilled in the art within the technical scope disclosed in the present disclosure should be included in the scope of the present disclosure. Therefore, the scope of the present disclosure is subject to the protection scope defined in claims.

In summary, the method, the device, the medium, the program product, and the terminal of the present disclosure have following advantages. By acquiring the to-be-transmitted image data, extracting one or more types of the channel image information from the to-be-transmitted image data based on the display mode of the receiving device to obtain the extracted channel image information, and arranging the extracted channel image information in the order of extraction to generate the to-be-transmitted queue, and packaging the to-be-transmitted queue in a preset manner to form the data packet and transmitting the data packet, the extraction of the channel image information is now more flexible, allowing users to choose and extract information from single or multiple channels based on their needs. The arranging of the extracted channel image information in the order of extraction effectively improves transmission efficiency, and the packaging of the to-be-transmitted queue in the preset manner ensures data integrity and accuracy. By utilizing the existing MIPI interface and protocol, the method of the present disclosure employs selective data extraction and low bandwidth during front-end encoding, transmission, and back-end decoding processes, which achieves efficient, low-power image data transmission, meeting the needs of wearable devices such as AR/VR glasses and headsets.

The above-mentioned embodiments are merely illustrative of the principle and effects of the present disclosure instead of limiting the present disclosure. Any person skilled in the art may modify or change the above embodiments without violating the spirit and scope of the present disclosure. Therefore, all equivalent modifications or changes made by those skilled in the art without departing from the spirit and technical concepts disclosed by the present disclosure should still be covered by the attached claims of the present disclosure.

## Claims

1. A method for transmitting display data in a low-power and simplified manner, comprising:
acquiring to-be-transmitted image data;
extracting one or more types of channel image information from the to-be-transmitted image data based on a display mode of a receiving device to obtain extracted channel image information, and arranging the extracted channel image information in the order of extraction to generate a to-be-transmitted queue; and
packaging the to-be-transmitted queue in a preset manner to form a data packet and transmitting the data packet.

2. The method according to claim 1, wherein when extracting one type of channel image information from the to-be-transmitted image data, arranging the extracted channel image information in the order of extraction to generate the to-be-transmitted queue comprises:
correspondingly extracting pixel data matching the display mode of the receiving device from a multi-channel image of the to-be-transmitted image data;
rearranging every N pieces of pixel data as a group based on an original pixel size in the to-be-transmitted image data to generate pixel blocks; and
arranging the pixel blocks sequentially to generate the to-be-transmitted queue.

3. The method according to claim 1, wherein packaging the to-be-transmitted queue in the preset manner comprises: packaging the to-be-transmitted queue in an uncompressed manner.

4. The method according to claim 3, wherein packaging the to-be-transmitted queue in the uncompressed manner comprises: packaging the to-be-transmitted queue, a data packet header, and a data packet footer in the uncompressed manner to generate the data packet.

5. The method according to claim 4, wherein the data packet header comprises a virtual channel number, and when the virtual channel number is determined to be three, the channel image information extracted from the to-be-transmitted image data is identified as single-channel image information.

6. The method according to claim 3, wherein packaging the to-be-transmitted queue in the uncompressed manner comprises: packaging an identification data structure and the to-be-transmitted queue in the uncompressed manner, wherein the identification data structure comprises a first byte and a second byte.

7. The method according to claim 6, wherein two low bits in the first byte are configured to represent a color channel for extraction, and the second byte comprises a CRC value of the first byte.

8. The method according to claim 7, wherein after the to-be-transmitted queue is packaged in the preset manner and the data packet is transmitted, the receiving device receives the data packet and verifies the first byte and the second byte; if the first byte and the second byte pass verification, the data packet is parsed based on the color channel in the first byte, and if the first byte or the second byte fails verification, the data packet is parsed based on a standard protocol.

9. The method according to claim 4, wherein the data packet header comprises one or more of a data type, a virtual channel, a count of words, and an error correction code.

10. The method according to claim 4, wherein the data packet footer comprises a CRC algorithm, an MD5 algorithm, an SHA-1 algorithm, or an SHA-256 algorithm.

11. The method according to claim 1, wherein when extracting two or more types of channel image information from the to-be-transmitted image data, arranging the extracted channel image information in the order of extraction to generate the to-be-transmitted queue comprises:
correspondingly extracting first pixel data and second pixel data matching the display mode of the receiving device from a multi-channel image of the to-be-transmitted image data;
rearranging every N pieces of pixel data as a group based on an original pixel size in the to-be-transmitted image data to generate pixel blocks; and
arranging the pixel blocks sequentially to generate the to-be-transmitted queue.

12. The method according to claim 11, wherein the generation of the to-be-transmitted queue further comprises:
extracting features of all the first pixel data and the second pixel data, combining the first pixel data and the second pixel data based on similarity or difference of the features to generate a pixel block queue, and performing an optimization operation on the pixel block queue to generate the to-be-transmitted queue.

13. The method according to claim 12, wherein the optimization operation comprises one or more of color adjustment and shape correction.

14. The method according to any one of claims 1-13, wherein attributes of the display mode of the receiving device comprise one or more of types of display channels of the receiving device, a count of the display channels of the receiving device, a resolution of the receiving device, a refresh rate of the receiving device, a color model of the receiving device, and a color space standard corresponding to the display channels of the receiving device.

15. The method according to any one of claims 1-13, wherein
a communication protocol standard for transmitting the data packets comprises one of an MIPI DSI standard, an LVDS standard, an EDP standard, and an HDMI standard; and/or
the to-be-transmitted image data comprises RGB images.

16. The method according to claim 15, wherein when the MIPI DSI standard is adopted for transmitting the data packets, packaging the to-be-transmitted queue in the preset manner comprises: packaging the to-be-transmitted queue as a pixel stream in a 24-bit format using a long data packet.

17. A device for transmitting display data in a low-power and simplified manner, comprising:
a data acquisition module, which acquires to-be-transmitted image data;
a channel extraction module, which extracts one or more types of channel image information from the to-be-transmitted image data based on a display mode of a receiving device to obtain extracted channel image information, and arranges the extracted channel image information in the order of extraction to generate a to-be-transmitted queue; and
a data packaging module, which packages the to-be-transmitted queue in a preset manner to form a data packet and transmits the data packet.

18. A non-transitory computer-readable storage medium, storing a computer program, wherein the computer program is executed by a processor to implement the method according to any one of claims 1-16.

19. A computer program product having computer program codes stored thereon, wherein the computer program codes run on a computer to implement the method according to any one of claims 1-16.

20. An electronic terminal, comprising a memory, a processor, and a computer program stored on the memory, wherein the computer program is executed by the processor to implement the method according to any one of claims 1-16.
